# EUROPÄISCHE PATENTANMELDUNG

(11) **EP 1 136 160 A1**
(43) Veröffentlichungstag der Anmeldung: **26.09.2001**
(21) Anmeldenummer: 01107162.8
(22) Anmeldetag: 22.03.2001
(51) Int. Cl.: B23B 41/02, B23B 31/20, B23B 31/36

(54) **Werkstückhalteeinrichtung**

(30) Priorität: 22.03.2000 DE 20005386 U
(71) Anmelder: TBT Tiefbohrtechnik GmbH, 72581 Dettingen/Erms (DE)
(72) Erfinder: Randecker, Hermann, 72581 Dettingen/Erms (DE)
(74) Vertreter: Patentanwälte Ruff, Wilhelm, Beier, Dauster & Partner

(57) **Zusammenfassung**

Eine Werkstückhalteeinrichtung zum Halten eines mittels einer Tiefbohreinrichtung mit einem Tiefbohrwerkzeug zu bearbeitenden Werkstückes hat ein bzgl. der Tiefbohreinrichtung festlegbares Basiselement (5) und eine daran angebrachte Spannvorrichtung zum Einspannen des Werkstückes derart, daß eine Bearbeitungsachse des Werkstückes in Bezug auf eine Werkzeugachse des Tiefbohrwerkzeuges ausrichtbar ist. Die Werkstückhalteeinreichung zeichnet sich dadurch aus, daß die Spannvorrichtung (16) im wesentlichen in das Basiselement (5) integriert und als Radialspannvorrichtung ausgebildet ist. Dadurch sind hochpräzise Bohrungen möglich, insbesondere bei Werkstücken mit exzentrischer Bohrung und bei Bohrvorgängen mit gegenläufiger Drehung von Werkzeug und Werkstück.

## Beschreibung

Die Erfindung betrifft eine Werkstückhalteeinrichtung zum Halten eines mittels einer Tiefbohreinrichtung mit einem Tiefbohrwerkzeug zu bearbeitenden Werkstückes gemäß dem Oberbegriff von Anspruch 1.

Das Tiefbohren ist ein modernes, wirtschaftliches Bearbeitungsverfahren, das sowohl zur Herstellung langer bzw. tiefer Bohrungen als auch zur Herstellung kürzerer Bohrungen mit höheren Genauigkeiten, dem sogenannten Präzisbohren, genutzt wird. Ziel der Bearbeitung ist die Erzeugung von möglichst lagegenauen maßgenauen Bohrungen, die entlang ihrer gesamten Länge möglichst wenig von einer geraden, koaxial zur Werkzeuglängsachse verlaufenden Bearbeitungsachse abweichen. Abweichungen vom angestrebten Ideal werden auch als "Bohrungsverlauf" bezeichnet.

Die Bearbeitung des Werkstückes kann mit drehendem Werkzeug und ruhendem Werkstück, mit drehendem Werkstück und ruhendem Werkzeug oder mit drehendem Werkzeug und vorzugsweise gegenläufig drehenden Werkstück erfolgen. Eine Werkstückdrehung, insbesondere eine Gegenlaufdrehung ist für die Reduzierung des Bohrungsverlaufs der Bohrung in der Regel besonders vorteilhaft, weil dadurch Ausweichbewegungen des Tiefbohrwerkzeuges reduziert werden können, die beispielsweise aufgrund von Materialinhomogenitäten des Werkstückes oder, beim Horizontalbohren von langen Bohrungen, schwerkraftbedingt auftreten können.

Zur Bearbeitung muß das Werkstück eingespannt werden. Hierzu dienen gattungsgemäße Werkstückhalteeinrichtungen, die ein normalerweise am Maschinenbett einer Tiefbohreinrichtung festlegbares Basiselement und eine daran angebrachte Spannvorrichtung zum Einspannen des Werkstückes umfassen. Das Basiselement kann z.B. ein Gestell, ein Bock, ein Spindelstock, ein Gehäuse o. dgl. sein. Die Einspannung erfolgt so, daß eine Bearbeitungsachse des Werkstückes, also die Achse der einzubringenden Bohrung, in Bezug auf eine Werkzeugachse des Tiefbohrwerkzeuges so ausrichtbar ist, daß die Bohrung am gewünschten Ort in der gewünschten Ausrichtung eingebracht werden kann.

Bekannt sind Werkstückhalteeinrichtungen mit Spannvorrichtungen in Form von Spannglocken, die an der werkstückzugewandten Vorderseite eines Basiselementes, beispielsweise eines Spindelstockes, drehfest oder drehbar angeordnet sind und die mit einer das andere Werkstückende haltenden Spannglocke unter Aufbau einer axialen Spannung im Werkstück zur Werkstückhalterung zusammenwirken. Spannglocken für zylindrische Werkstücke haben dabei an ihren einander zugewandten Stirnseiten konische Aufnahmeöffnungen, in die das Werkstück selbstzentrierend hineingedrückt wird.

Trotz dieser Zentrierung zeigen Bohrungen häufig nicht die gewünschte Präzision bzgl. Lage und/oder Ausrichtung.

Der Erfindung liegt die Aufgabe zugrunde, eine Werkstückhalteeinrichtung zu schaffen, bei deren Einsatz an einer Tiefbohreinrichtung Bohrungen mit im Vergleich zum Stand der Technik höherer Präzision erzeugt werden können, insbesondere bei exzentrischen Bohrungen und/oder Bohrungen mit Gegenlaufdrehung.

Diese Aufgabe wird gelöst durch eine Werkstückhalteeinrichtung mit den Merkmalen von Anspruch 1. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei einer erfindungsgemäßen Werkstückhalteeinrichtung ist die Spannvorrichtung im wesentlichen in das Basiselement integriert und sie ist als reine Radialspannvorrichtung ausgebildet. Durch die bauliche Integration in das Basiselement, also eine Anordnung der Spannvorrichtung im wesentlichen innerhalb des Basiselementes, wird eine besonders lagesichere bzw. lagestabile Anbringung möglich. Im Vergleich zu herkömmlichen, zur Werkstückseite hin nach vorne vom zugehörigen Basiselement abragenden Spannvorrichtungen können die beim Bohrvorgang auf die Spannvorrichtung wirkenden Kräfte besser aufgenommen und verteilt werden, so daß durch Bearbeitungskräfte bedingte Verlagerungen und/oder Verkippungen der Spannvorrichtung quer zur Bearbeitungsachse weitgehend vermieden werden. Zudem erlaubt die räumliche Integration eine kompaktere Bauweise der Werkstückhalteeinrichtung, da die Spannvorrichtung teilweise oder vollständig im Inneren des als Gehäuse dienenden Basiselementes angeordnet ist. Als Radialspannvorrichtungen werden hier solche Spannvorrichtungen bezeichnet, die im wesentlichen ausschließlich radial, d.h. in Richtungen weitgehend senkrecht zur Bearbeitungsachse, auf das Werkstück einwirken und praktisch keine in Axialrichtung auf dieses wirkenden Kräfte ausüben. Dies hat sich für die Aufnahme, die Zentrierung und das Spannen des aufgenommenen Werkstückes als sehr vorteilhaft erwiesen. Da eine sichere Einspannung keine Axialkräfte am Werkstück erzeugt und auch nicht erfordert, kann auf am gegenüberliegenden Werkstückende angreifende, Axialkräfte ausübende Halteeinrichtungen, wie Spannvorrichtungen, verzichtet werden. Im Vergleich zu herkömmlichen Spannglocken kann eine deutlich höhere Präzision der Bohrungslage beim Spannen erreicht werden.

Für eine werkstückschonende sichere Einspannung, mit der insbesondere auch eine nur einseitige Einspannung des Werkstücks problemlos realisierbar ist, kann vorgesehen sein, daß die wirksame Einspannlänge der Spannvorrichtung größer als der jeweilige Werkstückdurchmesser bzw. der Durchmesser der zur Werkstückaufnahme vorgesehenen Aufnahmeöffnung ist. Die Spannlänge kann beispielsweise mehr als das Doppelte dieses mittleren Durchmessers betragen, insbesondere das Drei- bis Fünffache.

Eine vorteilhafte Weiterbildung zeichnet sich dadurch aus, daß die Spannvorrichtung derart drehbar gelagert ist, daß das eingespannte Werkstück um die Bearbeitungsachse drehbar ist. Dadurch werden alle Tiefbohrvarianten mit drehendem Werkstück möglich, insbesondere auch solche mit zum Drehsinn des Tiefbohrwerkzeuges gegenläufigen Drehsinn. Bei einer konstruktiv besonders günstigen Weiterbildung ist die Spannvorrichtung an bzw. in einem vorzugsweise nach Art einer Hülse ausgebildeten Lagerelement gelagert, das in dem gehäuseartigen Basiselement um die Bearbeitungsachse drehbar gelagert ist. Die Unterbringung der Spannvorrichtung innerhalb einer drehbaren Lagerhülse macht es möglich, die Spannvorrichtung selbst im Hinblick auf ihre Spannaufgabe optimal zu konstruieren oder auch handelsübliche Radialspannvorrichtungen ohne oder mit nur geringen Modifikationen zu verwenden.

Bei einer Weiterbildung ist die Werkstückhalteeinrichtung so konstruiert, daß sie eine aktive Werkstückdrehung ermöglicht. Hierzu ist der Spanneinrichtung ein Drehantrieb zur Drehung der Spanneinrichtung um die Bearbeitungsachse zugeordnet, wobei dieser vorzugsweise außerhalb des Basiselementes bzw. Gehäuses mit Abstand zu diesem angeordnet und mittels einer Kraftübertragung, beispielsweise einem Riementrieb, mit der Spannvorrichtung zu deren Drehung gekoppelt ist.

Im Hinblick auf eine universelle Einsetzbarkeit der Werkstückhalteeinrichtung für unterschiedliche Bohrungslagen und/oder -ausrichtungen ist bei bevorzugten Weiterbildungen vorgesehen, daß die Spanneinrichtung als Wechseleinsatz ausgebildet ist, der, ggf. mit wenigen Handgriffen, auswechselbar in dem Basiselement, insbesondere in dem drehbaren Lagerelement aufnehmbar ist. Dadurch ist ein Wechsel zwischen unterschiedliche konstruierten Spanneinrichtungen und damit eine leichte Anpassung der Werkstückhalteeinrichtung an die jeweils zu erfüllende Bohraufgabe besonders einfach möglich.

Eine bzgl. der Bearbeitungsvielfalt besonders vorteilhafte Weiterbildung zeichnet sich dadurch aus, daß die Spannvorrichtung derart anordenbar oder angeordnet ist, daß die Bearbeitungsachse exzentrisch, d.h. in der Regel parallel versetzt, zu einer Zentralachse des Werkstückes anordenbar ist. Diese Exzentrizität ist vorzugsweise konstruktiv innerhalb der Spannvorrichtung realisiert, indem die Spannungs-Zentralachse, auf die alle radialen Spannkräfte gerichtet sind, parallel versetzt zu der Achse angeordnet ist, die bezogen auf die normalerweise weitgehend rotationssymmetrische, radiale Außenkontur der Spannvorrichtung deren Zentralachse darstellt. Durch Auswechselung von Spannvorrichtungen mit unterschiedlichen Exzentrizitäten oder auch ohne Exzentrizität können daher schnell und einfach die unterschiedlichsten Bohrungslagen realisiert werden.

Um einen Werkstückwechsel schnell und einfach durchführen zu können, ist vorzugsweise vorgesehen, daß die Spannvorrichtung automatisch, insbesondere hydraulisch, zwischen einer Spannkonfiguration und einer Freigabekonfiguration bzw. Entspannkonfiguration umschaltbar ist. Der Werkstückwechsel kann dann ohne Eingriff eines Bedieners in das die Spannvorrichtung aufnehmende Gehäuseinnere durchgeführt werden. Alternativ wäre beispielsweise auch eine Betätigung mittels elektrischer oder pneumatischer Aktoren möglich.

Eine bevorzugte Spannvorrichtung, die auch bei drehbarer Ausführung eine zuverlässige automatische Betätigung ermöglicht, hat mindestens zwei zur Einspannung des Werkstückes zusammenwirkende, vorzugsweise jeweils hülsenförmige Elemente, die mittels mindestens einer Feder in eine Einspannkonfiguration vorgespannt sind und durch vorzugsweise axiale Druckeinwirkung auf eines der Elemente entgegen der Kraft der Feder in eine Freigabekonfiguration relativ gegeneinander bewegbar sind. Insbesondere kann das eine Element der Spannvorrichtung eine mit einer axial durchgehenden Aufnahmeöffnung für das Werkstück versehene Spannhülse mit außen liegenden Keilflächen sein und das andere Element ein die Spannhülse umgebendes Spannfutter mit innen liegenden Keilflächen, die mit den äußeren Keilflächen der Spannhülse derart zusammenwirken, daß eine axiale Relativverschiebung der Spannhülse in Bezug auf das Spannfutter eine radiale Einspannung bzw. Entspannung der Spannhülse bewirkt. Die erzeugbaren radialen Spannkräfte wirken dabei weitgehend gleichmäßig aus allen Radialrichtunge, wodurch eine verzugsfreie, werkstückschonende Einspannung möglich ist. Wenn das äußere Element, also das Spannfutter, axial unbeweglich im Gehäuse oder dem drehbaren Lagerelement gelagert ist, kann durch Axialdruck auf die Spannhülse eine Entspannung bzw. eine Öffnung der Spannhülse bewirkt werden.

Eine besonders betriebssichere und im Hinblick auf eine weitere Automatisierung der Werkstückspannung vorteilhafte Weiterbildung zeichnet sich dadurch aus, daß eine Einspannkontrolleinrichtung vorgesehen ist, die es ermöglicht, von außerhalb des Gehäuses festzustellen, ob sich die Spannvorrichtung im gespannten oder entspannten Zustand befindet. Die Einspannkontrolleinrichtung hat vorzugsweise mindestens ein beispielsweise stiftförmiges Kontrollelement, das mit einem beweglichen Element der Spannvorrichtung oder einem Betätigungsorgan für die Spannvorrichtung bewegungsgekoppelt ist und vorzugsweise einen Betätigungsabschnitt zur Betätigung eines beispielsweise elektrischen Schalters hat. Über den Schalter kann beispielsweise die Steuerung der Tiefbohreinrichtung derart angesteuert werden, daß eine Werkzeugdrehung und ein Werkzeugvorschub nur dann möglich sind, wenn das Werkstück sicher eingespannt ist.

Im Hinblick auf eine Minimierung oder völlige Vermeidung des eingangs erwähnten Bohrungsverlaufes ist nach einer ganz besonders vorteilhaften Weiterbildung der Erfindung eine Verkippungseinrichtung zur gezielten Verkippung der Werkstückachse gegenüber der Werkzeugachse bzw. Bearbeitungsachse vorgesehen. Dadurch kann das Werkstück aus einer Normallage, bei der die Werkstücklängsachse parallel zur Werkzeugachse verläuft gezielt schräggestellt werden, um eine ggf. erforderliche Verlaufskorrektur zu erreichen. Die Verkippeinrichtung ist vorzugsweise derart ausgebildet, daß die Spannvorrichtung gegenüber dem Basiselement der Werkstückhalteeinrichtung bzw. einem die Spannvorrichtung umschließenden, drehbaren Lagerelement verkippbar ist, wobei vorzugsweise eine kontinuierliche bzw. stufenlose Verkippung in beliebige Richtungen um die Werkzeugachse herum möglich ist. Die Verkippung erfolgt dabei zweckmäßig so, daß der Mündungsbereich der Bohrung, also der werkzeugzugewandte Eintritt, bei Verkippung in seiner Lage im wesentlichen unverändert bleibt.

Eine konstruktiv besonders vorteilhafte Lösung, durch die diese Verkippbarkeit mit Hilfe nur weniger konstruktiver Modifikationen an der Werkstückhalteeinrichtung realisiert werden kann, zeichnet sich dadurch aus, daß die Spannvorrichtung zwei mit axialem Abstand zueinander angeordnete Lagerbereiche hat, wobei in einem Lagerbereich, insbesondere dem werkzeugzugewandten Lagerbereich, die Spanneinrichtung an dem Gehäuse oder an einem gegenüber dem Gehäuse nicht verkippbaren Lagerelement, beispielsweise der drehbaren Hülse, und in dem anderen Lagerbereich an einem Verstellelement gelagert bzw. abgestützt ist, das gegenüber dem Gehäuse oder dem genannten Lagerelement quer zur Bearbeitungsachse verschiebbar und in verschiedenen Verschiebepositionen festlegbar ist. Das Verstellelement ist vorzugsweise ein die Spannvorrichtung umgebender Verstellring, der beispielsweise mittels mehrerer radialer Stellschrauben verstellbar und festlegbar ist.

Eine Verkippeinrichtung dieser Art kann bei allen gattungsgemäßen Werkstückhalteeinrichtungen mit Vorteil eingesetzt werden, also auch bei solchen, bei denen die Spannvorrichtung nicht in ein Gehäuse integriert ist und/oder nicht als reine Radialspannvorrichtung augebildet ist.

Zur präzisen Bohrung ist bei Tiefbohreinrichtungen eine Werkzeugführungseinrichtung vorgesehen, die üblicherweise als Bohrbuchse mit einer axialen Durchtrittsöffnung ausgebildet ist und in der Regel mit ihrer dem Werkstück zugewandten Vorderseite an einer Stirnseite des Werkstückes anliegt. Die Werkzeugführungseinrichtung führt das durch die Durchgangsöffnung zum Werkstück hindurchgehende Tiefbohrwerkzeug. Die Werkzeugführungseinrichtung ist vorzugsweise am Gehäuse axial elastisch gelagert, wodurch eine zuverlässige Anlage der Werkzeugführungseinrichtung an die Werkstückstirnseite mit geeignetem Anpreßdruck automatisch gewährleistet ist.

Gemäß einer Weiterbildung wird ein störungsfreier Betrieb insbesondere beim automatischen Werkstückwechsel dadurch gefördert, daß eine Spüleinrichtung zur automatischen Spülung des Bereichs der werkzeugzugewandten Werkstückseite vorgesehen ist, um diesen Bereich frei von Spänen und anderen Verunreinigungen zu halten. Ein geeignetes Spülfluid, insbesondere eine Reinigungsflüssigkeit, kann im Bereich eines Spüleinlasses in das Gehäuse eingeleitet werden, von diesem über ein fluidführendes Kanalsystem zu dem zu spülenden Bereich gespült werden und von dort durch ein gehäuseinternes Kanalsystem zu einem Spülmittelauslaß. Die Spülung kann kontinuierlich erfolgen, vorzugsweise reicht jedoch eine Spülung während des Werkstückwechsels.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

Ein Ausführungsbeispiel der Erfindung ist in den Zeichnungen dargestellt und wird im folgenden näher erläutert. In den Zeichnungen zeigen:
- Fig. 1: einen vertikalen Längsschnitt durch eine bevorzugte Ausführungsform einer erfindungsgemäßen Werkstückhalteeinrichtung und
- Fig. 2: eine axiale Ansicht entlang der Schnittebene II-II in Fig. 1.

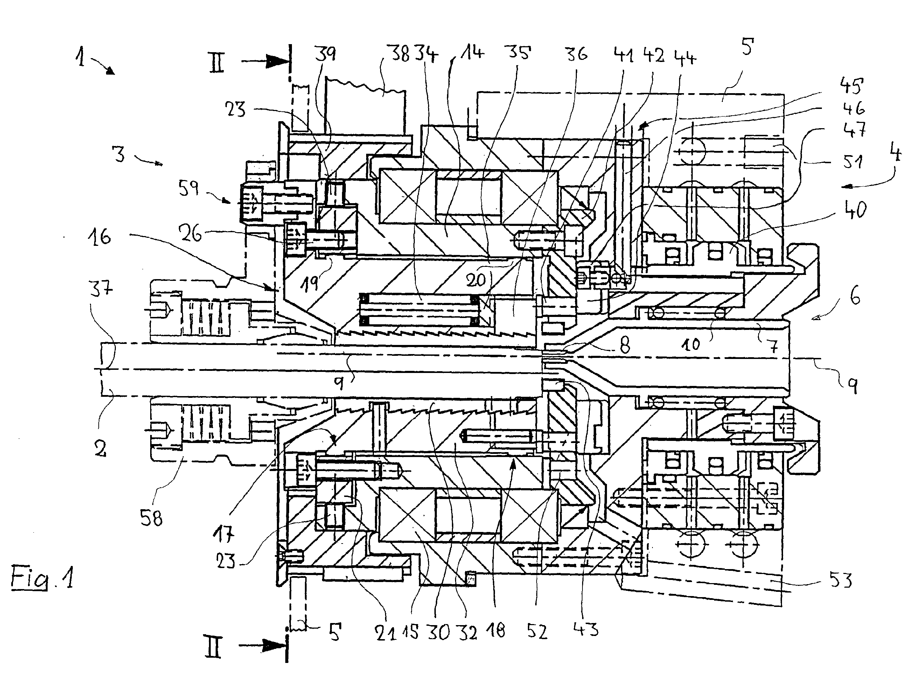

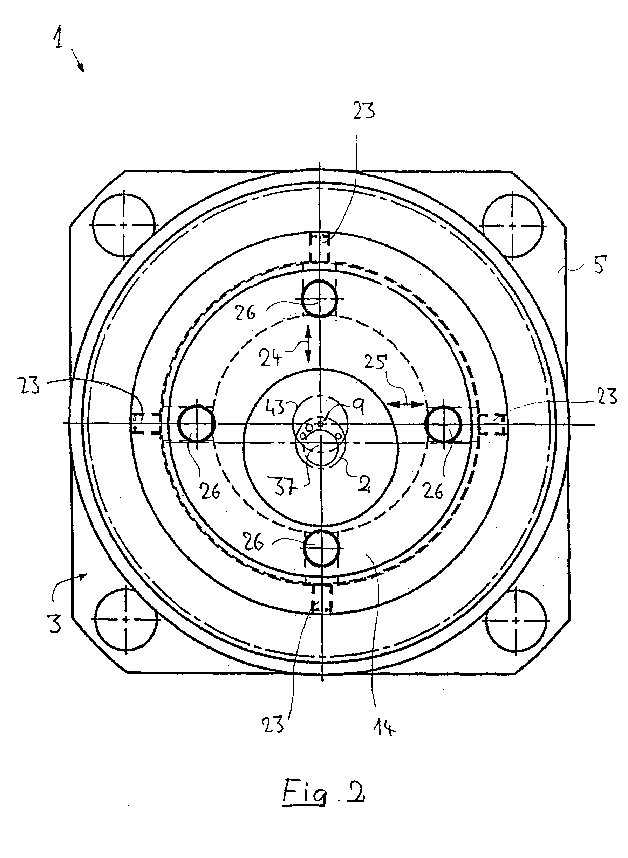

Die Ansicht in Fig. 1 zeigt in vertikalem Längsschnitt eine Werkstückhalteeinrichtung 1, die durch nicht näher gezeigte Spanneinrichtungen auf einem Maschinenbett einer Tiefbohreinrichtung festlegbar ist. Ein zu haltendes Werkstück 2, das im Beispiel eine kreiszylindrische Außenkontur hat, jedoch einen von der Kreisform abweichenden, ggf. eckigen Querschnitt haben kann, wird von der in der Zeichnungsfigur links und in Fig. 2 in Draufsicht dargestellten Vorderseite 3 in die Werkstückhalteeinrichtung eingeführt, während das zur Bearbeitung vorgesehene, nicht gezeigte Tiefbohrwerkzeug von der in Figur rechts gezeigten Rückseite 4 angenähert und eingeführt wird.

Die Werkstückhalteeinrichtung hat ein teilweise strichpunktiert gezeichnetes, mehrteiliges Basiselement in Form eines Gehäuses 5, das maschinenseitig installiert ist. In das Gehäuse ist auf der werkzeugzugewandten Seite eine im wesentlichen im Gehäuseinneren angeordnete Werkzeugführungseinrichtung 6 integriert. Diese umfaßt einen sich auf der werkstückzugewandten Seite konisch verjüngenden Bohrbuchsenhalter 7, der an seiner Auslaufseite eine Bohrbuchse 8 trägt, die der axial beweglichen und radial unbeweglichen Werkzeugführung dient. Durch die Zentralachse 9 der Bohrbuchse ist die Werkzeugachse in ihrer Lage bzgl. des Gehäuses bestimmt. Die Werkzeugführungseinrichtung ist parallel zu dieser Achse verschiebbar im Gehäuse geführt und gegen die Kraft einer den Bohrbuchsenhalter umgebenden Feder 10 elastisch verschiebbar.

Die Werkstückhalteeinrichtung ermöglicht es, das Werkstück während des Bohrvorganges um eine mit der Werkzeugachse 9 zusammenfallende Rotationsachse bzw. Bearbeitungsachse 9 zu drehen, kann also insbesondere als Werkstückgegenlaufeinrichtung genutzt werden. Hierzu ist innerhalb des Gehäuses eine um die Achse 9 drehbare Hülse 14 vorgesehen, die mittels einer sie umschließenden Drehlagereinrichtung 15 im Gehäuseinneren gelagert ist. In dem im wesentlichen zylindrischen Innenraum der Hülse 14 ist die eigentliche Spannvorrichtung 16 aufgenommen, die drehfest mit der Hülse 14 gekoppelt ist und sich bei Drehung der Hülse 14 mit dieser um die Achse 9 dreht. Die Spannvorrichtung ist über einen (nicht gezeigten) Drehantrieb aktiv antreibbar. Der beispielsweise elektromotorische Antrieb ist über einen Zahnriemen 38 mit einem mit der Hülse 14 verbundenen Rotationselement 39 gekoppelt. Durch die Verlagerung des Drehantriebes an einen ggf. weit von der Halteeinrichtung 1 entfernten Ort ist es möglich, die Werkstückhalteeinrichtung selbst sehr kompakt zu gestalten.

Zur Lagerung der Spannvorrichtung in der Hülse 14 hat die Spannvorrichtung zwei axial gegeneinander versetzte Lagerbereiche 17, 18, in denen jeweils am Außenumfang der Spannvorrichtung Ringbünde 19, 20 mit ballig nach außen gekrümmten Lagerflächen vorgesehen sind. Der werkzeugzugewandte Ringbund 20 stützt sich radial an der Innenwand der Hülse 14 ab. Der werkstückzugewandte Ringbund 19 stützt sich dagegen radial an der Innenseite eines in eine Ringausnehmung der Hülse 14 eingelegten Verstellringes 21 ab. Dieser ist wesentlicher Bestandteil einer später noch erläuterten Verkippeinrichtung zur gezielten Verkippung der Bearbeitungsachse des Werkstükkes gegenüber der Werkzeugachse 9 und läßt sich mit Hilfe von vier gleichmäßig an seinem Umfang angreifende, radial ausgerichtete Stellschrauben 23 in einer Radialebene zur Werkzeugachse 9 wegbegrenzt sowohl in Vertikalrichtung 24, als auch in Horizontalrichtung 25 stufenlos verschieben und festlegen. Die Festlegung des Verstellringes 21 in der Verschiebeposition wird durch axiale Feststellschrauben 26 unterstützt, die jeweils radial innerhalb der Stellschrauben 23 angeordnet sind und in axiale Innengewinde des Verstellringes eingreifen.

Die als Ganzes leicht aus dem Gehäuse bzw. aus der Hülse 14 zur Werkstückseite hin entnehmbare und damit als Wechseleinsatz ausgebildete Spanneinrichtung 16 ist im wesentlichen vollständig in das Gehäuse 5 integriert, also im Inneren des Gehäuses angeordnet. Sie umfaßt eine Spannhülse 30, die eine axial durchgehende Aufnahmeöffnung hat, deren Querschnitt im wesentlichen dem Querschnitt des aufzunehmenden Werkstückes entspricht. Die axiale Länge der Spannhülse beträgt zweckmäßig ein Mehrfaches des mittleren Werkstückdurchmessers, im Beispiel etwa das Drei- bis Vierfache, so daß eine im Vergleich zum Werkstückdurchmesser große Spannlänge realisierbar ist. An ihre Außenseite hat die Spannhülse eine umlaufende Schrägverzahnung, durch die in Axialrichtung wirkende Keilflächen bereitgestellt werden. Die Spannhülse ist auf gesamter Länge von einer hier als Spannfutter bezeichneten Außenhülse 32 umgeben, die an ihrem im wesentlichen zylindrischen Außenumfang die Ringbünde 19, 20 zur Abstützung an der Innenseite der Hülse trägt. Die der Spannhülse 30 zugewandte Innenseite der Außenhülse 3 hat eine Innenschrägverzahnung, die zum Eingriff mit der Außenschrägverzahnung der Hülse 30 ausgebildet und im wesentlichen komplementär zu dieser geformt ist.

Während das äußere Spannfutter 32 in Bezug auf das Gehäuse bzw. die Hülse 14 axial unbeweglich festgelegt ist, ist die innere Spannhülse 30 gegenüber dieser axial verschiebbar, wobei die Keilflächen derart zusammenwirken, daß eine Verschiebung der Innenhülse 30 in Richtung des Werkzeuges zu einer Einspannung des Werkstückes und eine Verschiebung in Werkstückrichtung zu einer Entspannung der Spanneinrichtung führt. Die Spannvorrichtung ist in ihre Einspannkonfiguration (mit allseitigem radialem Spanneingriff am Werkstück) vorgespannt. Hierzu ist in eine Ausnehmung der Außenhülse eine Feder 34 eingelegt, die sich auf der Werkstückseite an der Außenhülse 32 und auf der Werkzeugseite über eine Scheibe 35 an einem Ring 36 abstützt, der axial fest auf die innere Spannhülse 30 aufgeschraubt ist. Dadurch ist es möglich, die Spannvorrichtung in eine Entspann- bzw. Freigabekonfiguration zu verstellen, indem die innere Hülse 30 mittels axialem Druck auf die werkzeugseitige Stirnseite des Ringes 36 in Richtung des Werkstückes gedrückt wird. Bei Druckentlastung dagegen erfolgt unter der Kraft der Feder 34 automatisch eine radiale Einspannung eines eingeführten Werkstückes in die in Fig. 1 gezeigte Entspannkonfiguration. Anstelle der dargestellten Spannhülse kann auch eine Spannzange, ein Hydrodehnspannfutter oder eine ähnliche Spanneinrichtung eingebaut werden, die vorzugsweise einen radial allseitigen zentrischen Spanndruck ausübt.

Diese vorteilhafte Ausbildung der Spannvorrichtung ermöglicht es, die Spannvorrichtung automatisch ohne Eingriff eines Bedieners in das Innere des Gehäuses zwischen der Einspannkonfiguration und der Freigabekonfiguration umzuschalten. Die hierfür vorgesehene hydraulische Umschaltvorrichtung umfaßt einen in einer axialen Ausnehmung des Gehäuses axial geführten und beidseitig mit Fluiddruck beaufschlagbaren Hydraulikkolben 40, der mechanisch über eine mit dem Kolben fest verbundene Druckscheibe 44 mit mehreren Entspannbolzen 41 gekoppelt ist, die axial verschiebbar in zylindrischen, axialen Durchgangsbohrungen einer an der werkzeugzugewandten Stirnseite der Hülse 14 angeschraubten und mit dieser drehbaren Scheibe 42 geführt sind. Diese Scheibe hat eine zentrische Durchgangsöffnung, in deren Bereich eine Ringbuchse 43 befestigt ist, die als Axialanschlag für die Werkzeugeinführung dient. Es ist zu erkennen, daß das Werkstück 2 aufgrund seiner bezogen auf die Bohrungsachse 9 exzentrischen Einspannung nur an einem unteren Abschnitt der Ringbuchse 43 anliegt.

Die gezeigte Ausführungsform der Spanneinrichtung ermöglicht es nämlich, das Werkstück 2 exzentrisch zur Bohrungsachse 9 anzuordnen derart, daß die zentrale Werkstückachse 37 in Querrichtung gegenüber der Bohrungsachse 9 versetzt liegt. Diese Exzentrizität wird durch konstruktive Maßnahmen innerhalb der Spannvorrichtung erreicht, indem die gezahnte Aufnahmeöffnung für die innere Spannhülse 30 bezogen auf die im wesentlichen zylindrische Außenfläche bzw. Außenkontur des Spannfutters 32 entsprechend radial versetzt ist. Unterschiedliche Exzentrizitäten lassen sich aufgrund der leichten Auswechselbarkeit der Spannvorrichtung mühelos realisieren.

Die jeweils vorliegende Spannsituation der im Inneren des Gehäuses verborgenen Spannvorrichtung 16 läßt sich bei der gezeigten Ausführungsform mühelos von außen erkennen. Hierzu ist eine Einspannkontrolleinrichtung 45 vorgesehen, die einen Kontrollstift 46 umfaßt, der in einer radialen Bohrung des Gehäuses radial verschiebbar geführt ist. An seiner inneren Stirnfläche hat der Stift eine zur Werkstückseite gewandte Schrägfläche, die keilartig mit einer entsprechend ausgerichteten Schrägfläche zusammenwirkt, die an einem an der Scheibe 44 befestigten Halter 47 ausgebildet ist. Die Keilflächen wirken so zusammen, daß bei Entspannung der Spannvorrichtung, wenn sich also die Einspannbolzen zum Werkstück hin bewegen und Druck auf die innere Hülse 30 ausüben, der Kontrollstift 46 nach innen bewegt wird. Entsprechend wird der Stift nach außen verschoben, wenn die Bolzen zur Werkzeugseite zurückgezogen sind und dementsprechend das Werkstück eingespannt ist. Ein nach außen abragender Betätigungsabschnitt des Kontrollstiftes kann zur Betätigung eines Endschalters genutzt werden, der mit der Steuerung der Tiefbohreinrichtung derart zusammenwirkt, daß diese nur bei Betätigung des Schalters in Betrieb gesetzt werden kann. Damit ist sichergestellt, daß nur bei zuverlässig eingespanntem Werkstück ein Bohrvorgang eingeleitet werden kann. Die Lage des Kontrollstiftes kann auch für eine optische Kontrolle des Spannzustandes der Spannvorrichtung genutzt werden.

Als weitere Einrichtung zur Sicherstellung eines störungsfreien Betriebes und einer präzisen Bohrung ist der Werkstückhalteeinrichtung eine Spüleinrichtung zugeordnet, die es erlaubt, den werkzeugzugewandten Bereich des Werkstückes, insbesondere den Kontaktbereich zwischen Bohrbuchse 8 und Werkstück, unter Druck mit einem geeigneten, normalerweise flüssigen Reinigungsfluid, zu reinigen und damit von Spänen und anderen Verunreinigungen zu befreien. Die Spüleinrichtung umfaßt eine nicht gezeigte Druckfluidquelle, die mittels eines Spülfluidschlauches an einen im Gehäuse vorgesehenen Spülleitungsanschluß 51 angeschraubt werden kann. Dieser ist über ein teilweise nicht gezeigtes Kanalsystem im Inneren des Gehäuses fluidleitend mit dem zu spülenden Bereich an der Stirnseite des Werkstückes verbunden. Im unteren Bereich der Scheibe 42 ist eine axiale Durchlaßöffnung 52 zu erkennen, durch die das Spülfluid aus dem Bereich zwischen Werkstück und Werkzeugführung zur Werkzeugseite hin in ein Kanalsystem geführt wird, das zu einem Spülmittelabfluß 53 führt. Das Spülfluid kann ggf., nach entsprechender Filterung, zur erneuten Spülung des kritischen Bereiches rückgeführt werden.

Die Werkstückhalteeinrichtung erlaubt eine hochpräzise Bohrung des Werkstückes unter weitgehender Vermeidung des eingangs erwähnten Bohrungsverlaufes vor allem dadurch, daß mittels einer Verkippeinrichtung 55 die werkstückfeste Achse 37 gegenüber der Werkzeug- bzw. Bearbeitungsachse 9 gezielt verkippt werden kann, so daß bewußt eine schräge Einbohrung in die Werkzeugstirnseite möglich ist. Durch diese leichte Verkippung kann, insbesondere bei gegenläufiger Drehung zwischen Werkzeug und Werkstück, eine automatische Verlaufskorrektur bewirkt werden. Hierzu kann es ausreichen, eine Schrägstellung einzustellen, die nur Bruchteile eines Grades beträgt und z.B. in der Größenordnung von einem Zehntelmillimeter pro 100 mm Materiallänge liegen kann. Die Verstelleinrichtung umfaßt als wesentliches Element den schon oben erwähnten Verstellring 21, der an der Aufnahmehülse 14 für die Spanneinrichtung an deren werkstückzugewandter Stirnseite angebracht ist. Zur Verstellung, die bei stehender Hülse 14 durchzuführen ist, werden zunächst die axialen Spannschrauben 26 etwas gelockert und anschließend kann z.B. für eine Verkippung nach oben die unten liegende Madenschraube 23 einwärts und die gegenüberliegende obere Madenschraube auswärts gedreht werden, wodurch sich eine Verschiebung des Verstellringes im wesentlichen in Vertikalrichtung 24 nach oben ergibt. Ist die gewünschte Kipposition eingestellt, so kann der Verstellring zunächst durch Festziehen der Madenschrauben 23 und anschließend durch Festziehen der axialen Festhalteschrauben 26 in dieser Verstellposition gesichert werden. Bei der Verstellung wird der werkstückzugewandte Teil der Spannvorrichtung in Verstellrichtung mitgenommen, weil sich der vorderen Ringbund 19 an der Innenseite des Verstellringes 21 abstützt. Der werkzeugzugewandte Teil der Spanneinrichtung erfährt dagegen keine Querbewegung, da sich der dortige Ringbund 20 mit seiner balligen Außenfläche an der Innenseite der Hülse 14 abstützt, die nicht verkippt oder axial verschoben wird. Es wird also die Spannvorrichtung 16 als Ganzes relativ zu der sie aufnehmenden Hülse 14 bzw. relativ zum Gehäuse der Werkstückhaltevorrichtung verkippt, wobei ihre übrigen Eigenschaften, insbesondere ihre Drehbarkeit um die Bearbeitungsachse 9 sowie die vorteilhaften Spanneigenschaften voll erhalten bleiben.

Die Werkstückhalteeinrichtung kann wie folgt eingesetzt werden. Zunächst wird auf den Endbereich des einzuspannenden Werkstückes ein strichpunktiert gezeichneter Halter 58 aufgespannt. Der Halter dient im wesentlichen dazu sicherzustellen, daß die radiale Lage des Werkstückes erhalten bleibt. Hierzu ist eine Indexierung 59 vorgesehen. Der Halter bleibt auf dem Werkstück auch dann aufgeklemmt, wenn dieses zu einer anderen Bohrvorrichtung transportiert und dort bearbeitet wird. Bei der Einführung des Werkstückes wird ein aus dem Halter 58 herausragender Abschnitt des Werkstückes 2 axial in die innere Spannhülse 30 eingeführt, bis seine Stirnseite am Axialanschlag 43 anschlägt und ggf. die Bohrbuchse gegen die Kraft der Feder 10 zur Werkzeugseite hin etwas verschiebt. Die Werkzeugführung liegt dann unter dem Druck der Feder 10 zuverlässig an der Werkstückstirnseite an.

Die Einführung ist nur in der gezeigten Entspannkonfiguration der Spanneinrichtung möglich, die dadurch eingestellt wird, daß vor der Einführung des Werkstückes der Hydraulikkolben 40 so mit Druck beaufschlagt wird, daß er sich zur Werkstückseite hin bewegt und dadurch über die Druckscheibe 44 die Bolzen 41 auf die Stirnseite des Ringes 36 drückt, um die Spannhülse 30 aufzuweiten. Ist das Werkstück axial angeschlagen, so wird der Hydraulikkolben entlastet und ggf. in Gegenrichtung druckbelastet, damit die Einspannbolzen 41 druckentlastet werden und die Scheibe 44 ggf. so weit zurückgezogen wird, daß zwischen ihr und der drehbaren Scheibe 42 ein kleiner Abstand verbleibt. Nun kann die Werkstückbearbeitung beginnen, indem z.B. zunächst der Drehantrieb die Spanneinrichtung 16 zur Drehung des Werkstückes um die Achse 9 antreibt. Dadurch, daß die Druckscheibe 44 entweder weitgehend drucklos an den Bolzen 41 anliegt oder gar von diesen zurückgezogen ist, treten in dem Trennbereich zwischen drehenden Teilen und gehäusefesten Teilen wenige oder keine durch Materialreibung verursachte Störungen, wie beispielsweise Reibungsverluste oder Verschleiß, auf. Während des Bohrvorganges wird das Bohrloch in bekannter Weise durch Bohröl gereinigt, das über das Tiefbohrwerkzeug herangeführt und durch die Werkzeugführung 6 abgeführt wird. Ist der Bohrvorgang abgeschlossen, so wird der Drehantrieb angehalten, das Tiefbohrwerkzeug wird zurückgezogen und die Spanneinrichtung kann entspannt werden. Hierzu wird der Kolben 40 so mit Druck beaufschlagt, daß die Entspannbolzen 41 auf den Ring 36 und damit auf die Spannhülse 30 zu deren Verschiebung in Werkstückrichtung einwirkt. Dadurch weitet sich diese geringfügig auf, so daß das Werkstück freigegeben wird und nach außen abgezogen werden kann. Ist eine Verlaufskorrektur erforderlich, so wird vor dem Bohrvorgang noch die Verkippeinrichtung 55 auf den gewünschten Schrägwinkel zwischen Werkstückachse 37 und Bohrungsachse 9 eingestellt.

## Patentansprüche

1. Werkstückhalteeinrichtung zum Halten eines mittels einer Tiefbohreinrichtung mit einem Tiefbohrwerkzeug zu bearbeitenden Werkstückes, die Werkstückhalteeinrichtung mit einem bzgl. der Tiefbohreinrichtung festlegbaren Basiselement (5) und einer daran angebrachten Spannvorrichtung zum Einspannen des Werkstückes derart, daß eine Bearbeitungsachse des Werkstückes in Bezug auf eine Werkzeugachse des Tiefbohrwerkzeuges ausrichtbar ist, **dadurch gekennzeichnet, daß** die Spannvorrichtung (16) im wesentlichen in das Basiselement (5) integriert und als Radialspannvorrichtung ausgebildet ist.

2. Werkstückhalteeinrichtung nach Anspruch 1, **dadurch gekennzeichnet, daß** die Spannvorrichtung (16) eine wirksame Einspannlänge hat, die größer als der Durchmesser einer das Werkstück (2) aufnehmenden Aufnahmeöffnung ist und vorzugsweise mehr als das Doppelte dieses Durchmessers beträgt.

3. Werkstückhalteeinrichtung nach Anspruch 1 oder 2, **dadurch gekennzeichnet, daß** die Spannvorrichtung (16) derart drehbar gelagert ist, daß das eingespannte Werkstück (2) um die Bearbeitungsachse (9) drehbar ist.

4. Werkstückhalteeinrichtung nach einem der vorhergehenden Ansprüche, **dadurch gekennzeichnet, daß** die Spannvorrichtung (16) in einem vorzugsweise nach Art einer Hülse ausgebildeten Lagerelement (14) gelagert ist, das um die Bearbeitungsachse (9) drehbar in dem Basiselement (5) gelagert ist.

5. Werkstückhalteeinrichtung nach einem der vorhergehenden Ansprüche, **dadurch gekennzeichnet, daß** die Spannvorrichtung (16) als Wechseleinsatz ausgebildet ist, der auswechselbar in dem Gehäuse (5), insbesondere in dem drehbaren Lagerelement (14), aufnehmbar ist.

6. Werkstückhalteeinrichtung nach einem der vorhergehenden Ansprüche, **dadurch gekennzeichnet, daß** der Spannvorrichtung (16) ein Drehantrieb zur Drehung der Spannvorrichtung um die Bearbeitungsachse (9) zugeordnet ist, wobei der Drehantrieb vorzugsweise außerhalb des Gehäuses angeordnet und mittels einer Kraftübertragung, insbesondere mittels eines Riementriebes (38), mit der Spannvorrichtung zu deren Drehung gekoppelt ist.

7. Werkstückhalteeinrichtung nach einem der vorhergehenden Ansprüche, **dadurch gekennzeichnet, daß** die Spannvorrichtung (16) derart angeordnet, anordenbar oder ausgebildet ist, daß die Bearbeitungsachse (9) exzentrisch zu einer Zentralachse (37) des Werkstückes (2) anordenbar ist, wobei vorzugsweise die Spannvorrichtung eine zur Bearbeitungsachse (9) zentrische Außenkontur hat und eine Aufnahmeöffnung für das Werkstück exzentrisch zu dieser Außenkontur angeordnet ist.

8. Werkstückhalteeinrichtung nach einem der vorhergehenden Ansprüche, **dadurch gekennzeichnet, daß** die Spannvorrichtung (16) automatisch, insbesondere hydraulisch, zwischen einer Einspannkonfiguration und einer Freigabekonfiguration ihrer Elemente (30, 32) umschaltbar ist.

9. Werkstückhalteeinrichtung nach einem der vorhergehenden Ansprüche, **dadurch gekennzeichnet, daß** die Spannvorrichtung (16) mittels mindestens einer Feder (34) in eine Einspannkonfiguration und durch Druckeinwirkung entgegen der Kraft der Feder in eine Freigabekonfiguration verstellbar ist.

10. Werkstückhalteeinrichtung nach einem der vorhergehenden Ansprüche, **dadurch gekennzeichnet, daß** die Spannvorrichtung (16) eine mit einer axial durchgehenden Aufnahmeöffnung für das Werkstück versehene Spannhülse (30) mit äußeren Keilflächen und eine die Spannhülse (30) umgebende Außenhülse (32) mit korrespondierenden inneren Keilflächen aufweist, wobei die Keilflächen derart ausgebildet sind, daß bei axialer Relativverschiebung der Spannhülse (30) gegenüber der Außenhülse (32) die Spannhülse (30) mit im wesentlichen allseitigem Radialdruck beaufschlagbar oder entlastbar ist.

11. Werkstückhalteeinrichtung nach einem der vorhergehenden Ansprüche, **dadurch gekennzeichnet, daß** eine Einspannkontrolleinrichtung zur Kontrolle und/oder zur Anzeige der Spannsituation der Spannvorrichtung (16) vorgesehen ist, insbesondere mit mindestens einem vorzugsweise stiftförmigen Kontrollelement (46), das mit mindestens einem Betätigungsorgan (40, 41) für die Spannvorrichtung bewegungsgekoppelt ist und vorzugsweise einen Betätigungsabschnitt zur Betätigung eines Schalters hat.

12. Werkstückhalteeinrichtung nach einem der vorhergehenden Ansprüche, **dadurch gekennzeichnet, daß** eine Verkippeinrichtung zur gezielten Verkippung der Werkstückachse (37) gegenüber der Bearbeitungsachse (9) vorgesehen ist, wobei die Verkippeinrichtung vorzugsweise derart ausgebildet ist, daß die Spannvorrichtung (16) gegenüber dem Gehäuse (5) der Werkstückhalteeinrichtung und/oder gegenüber einem in dem Gehäuse drehbar gelagerten Lagerelement (14) verkippbar ist.

13. Werkstückhalteeinrichtung nach einem der vorhergehenden Ansprüche, **dadurch gekennzeichnet, daß** die Spannvorrichtung (16) zwei mit axialem Abstand angeordnete Lagerbereiche (17, 18) hat, wobei in einem vorzugsweise werkzeugseitigen Lagerbereich (18) die Spannvorrichtung an dem Gehäuse (5) oder einem gegenüber dem Gehäuse nicht verkippbaren, insbesondere drehbaren Lagerelement (14) und in dem anderen Lagerbereich (17) an einem Verstellelement (21) gelagert ist, das gegenüber dem Gehäuse oder dem Lagerelement (14) quer zur Bearbeitungsachse verschiebbar und in verschiedenen Verschiebepositionen festlegbar ist.

14. Werkstückhalteeinrichtung nach Anspruch 13, **dadurch gekennzeichnet, daß** das Verstellelement ein die Spannvorrichtung umgebender Verstellring (21) ist und/oder daß das Lagerelement eine drehbare, die Spannvorrichtung (16) umschließende Hülse (14) ist, die vorzugsweise um die Bearbeitungsachse (9) drehbar in dem Gehäuse (5) gelagert ist.

15. Werkstückhalteeinrichtung nach einem der vorhergehenden Ansprüche, **dadurch gekennzeichnet, daß** eine Werkzeugführungseinrichtung (6) in die Werkzeughalteeinrichtung (1) integriert ist, wobei die Werkzeugführungseinrichtung vorzugsweise axial elastisch verschiebbar im Gehäuse gelagert ist.

16. Werkstückhalteeinrichtung nach einem der vorhergehenden Ansprüche, **dadurch gekennzeichnet, daß** eine Spüleinrichtung zur automatischen Spülung des Bereichs der werkzeugzugewandten Werkstückseite vorgesehen ist, wobei die Spüleinrichtung vorzugsweise mindestens einen Spülleitungsanschluß (51) umfaßt, von dem ein den zu spülenden Bereich umfassendes Kanalsystem zu einem Spülmittelauslaß (53) führt.

17. Werkstückhalteeinrichtung nach einem der vorhergehenden Ansprüche, **dadurch gekennzeichnet, daß** ihr mindestens ein indexierbarer Werkstückhalter (58) zugeordnet ist, mit dem das Werkstück in seiner radialen Lage relativ zur Werkstückhalteeinrichtung genau fixierbar ist.

18. Tiefbohreinrichtung mit mindestens einer an der Tiefbohreinrichtung festgelegten oder festlegbaren Werkstückhalteeinrichtung nach einem der Ansprüche 1 bis 17.
